# EUROPÄISCHE PATENTANMELDUNG

(11) **EP 4 542 743 A1**
(43) Veröffentlichungstag der Anmeldung: **23.04.2025**
(21) Anmeldenummer: 24206686.8
(22) Anmeldetag: 15.10.2024
(51) Int. Cl.: H01M 50/213, H01M 50/256, H01M 10/04

(54) **VORRICHTUNG ZUM HANDHABEN VON BAUTEILEN**

(30) Priorität: 19.10.2023 DE 102023128811
(71) Anmelder: teamtechnik Maschinen und Anlagen GmbH, 71691 Freiberg (DE)
(72) Erfinder: Mangold, Jan, 71732 Tamm (DE)
(74) Vertreter: Witte, Weller & Partner Patentanwälte mbB

(57) **Zusammenfassung**

Die Erfindung betriff Vorrichtung zum Handhaben von Bauteilen, insbesondere zylindrischen Batteriezellen, mit einer Magazineinrichtung (80), die ein Trägerelement (54) und zumindest zwei darauf angeordnete Magazine (40, 42) aufweist, wobei jedes Magazin verlagerbar, vorzugsweise drehbar, auf dem Trägerelement (54) gehalten ist und jeweils eine Aufnahmeeinheit (82) mit mehreren Aufnahmeplätzen (84) für jeweils ein Bauteil (16, 18) aufweist, einer ersten Antriebseinheit (98), die vorzugsweise mit dem Trägerelement (54) gekoppelt ist, um ein Magazin in eine erste Position (41), Befüllposition, und in eine zweite Position (43), Übergabeposition, zu bewegen; und einer Befülleinheit (36), die ausgelegt ist, ein Bauteil in einen Aufnahmeplatz (84) des in der Befüllposition positionierten Magazins (40) zu bringen; wobei jedem Aufnahmeplatz (84) ein erstes Element (86) zur seitlichen Abstützung eines Bauteils und ein zweites Element (88) zur senkrechten Abstützung des Bauteils (16, 18) zugeordnet ist; und
wobei das erste Element (86) und das zweite Element (88) relativ zueinander verlagerbar sind, um das im Aufnahmeplatz (84) gehaltene Bauteil aus der Aufnahmeposition in eine Übernahmeposition zu bringen, in der das Bauteil von einer nachgeordneten Handhabungseinrichtung (46, 44) aufnehmbar ist. Die Erfindung betrifft ferner eine Vorrichtung zum Umsetzen von Bauteilen, ein Verfahren zum Handhaben von Bauteilen und ein Verfahren zum Umsetzen von Bauteilen.

## Beschreibung

Die vorliegende Erfindung betrifft eine Vorrichtung zum Handhaben von Bauteilen, insbesondere zylindrischen Batteriezellen. Die Erfindung betrifft ferner eine Vorrichtung zum Umsetzen von Bauteilen, wobei die Bauteile insbesondere durch die vorgenannte Vorrichtung bereitgestellt werden, sowie ein Verfahren zum Handhaben von Bauteilen.

Insbesondere bei der Herstellung von Batteriemodulen, die eine Vielzahl von Batteriezellen (nachfolgend auch "Zellen" genannt) aufweisen, muss in einem Befüllvorgang eine große Anzahl von Batteriezellen in richtiger Pol-Lage in ein Aufnahmegehäuse des Batteriemoduls eingesetzt werden. Hierfür gibt es eine Reihe von Lösungen, die in der Regel gemein haben, dass mehrere Zellen gleichzeitig in das Aufnahmegehäuse eingesetzt werden.

Obgleich sich dieser Vorgang in der Praxis bewährt hat, bleibt weiterhin der Wunsch bestehen, eine Anlage zu schaffen, die einerseits mit hohem Durchsatz arbeitet und andererseits sehr flexibel und schnell auf unterschiedliche Anwendungen umgestellt werden kann. Hierbei ist insbesondere auf unterschiedliche Befüllungen von Zellen in Aufnahmegehäuse zu denken. Verändert sich beispielsweise die Anordnung der Zellen innerhalb des Aufnahmegehäuses und gegebenenfalls auch ihrer Pol-Lage, müssen bestehende Anlagen umfangreich umgerüstet werden.

Vor diesem Hintergrund besteht eine Aufgabe der vorliegenden Erfindung darin, eine Vorrichtung zum Handhaben von Bauteilen so weiterzubilden, dass sie einen hohen Durchsatz ermöglicht und flexibel einsetzbar ist und bei Änderungen der Anordnung von Bauteilen im Endprodukt keinen bzw. nur einen geringen Umrüstaufwand erforderlich macht.

Diese Aufgabe wird von einer Vorrichtung zum Handhaben von Bauteilen gemäß Anspruch 1, einer Vorrichtung zum Umsetzen von Bauteilen gemäß Anspruch 14 sowie einem Verfahren zum Handhaben von Bauteilen gemäß Anspruch 18 und einem Verfahren zum Umsetzen von Bauteilen gemäß Anspruch 19 gelöst.

Die erfindungsgemäße Vorrichtung zum Handhaben von Bauteilen, insbesondere zylindrischen Batteriezellen, weist eine Magazineinrichtung auf, die ein Trägerelement und zumindest zwei darauf angeordnete Magazine aufweist, wobei jedes Magazin verlagerbar, vorzugsweise drehbar, auf dem Trägerelement gehalten ist und jeweils eine Aufnahmeeinheit mit mehreren Aufnahmeplätzen für jeweils ein Bauteil aufweist, eine erste Antriebseinheit, die vorzugsweise mit dem Trägerelement gekoppelt ist, um ein Magazin in eine erste Position, Befüllposition, und in eine zweite Position, Übergabeposition, zu bewegen, und eine Befülleinheit, die ausgelegt ist, ein Bauteil in einen Aufnahmeplatz des in der Befüllposition positionierten Magazins zu bringen, wobei jedem Aufnahmeplatz ein erstes Element zur seitlichen Abstützung eines Bauteils und ein zweites Element zur senkrechten Abstützung des Bauteils zugeordnet ist, und wobei das erste Element und das zweite Element relativ zueinander verlagerbar sind, um das im Aufnahmeplatz gehaltene Bauteil aus einer Aufnahmeposition in eine Übernahmeposition zu bringen, in der das Bauteil von einer nachgeordneten Handhabungseinrichtung aufnehmbar ist.

Das bedeutet mit anderen Worten, dass Mithilfe der zumindest zwei vorgesehenen Magazinen zur gleichen Zeit ein Befüllen eines Magazins und das Entleeren des anderen Magazins möglich ist. Damit erfolgt der Vorgang der Überführung von Bauteilen in Richtung des Endprodukts mit hoher Geschwindigkeit. Darüber hinaus ist es möglich, die Bauteile einzeln in ein Endprodukt, bspw. ein Batteriemodul, auszubringen, ohne den Vorgang des Befüllens des ersten Magazins abbremsen zu müssen.

Darüber hinaus ermöglicht das Befüllen des ersten Magazins mit einzelnen Bauteilen eine beliebige spätere Ausrichtung, insbesondere Längsausrichtung, bspw. Pol-Lage einer Batteriezelle, im Endprodukt, da bereits beim Befüllen die richtige Ausrichtung eingestellt werden kann.

Die Aufgabe der Erfindung wird damit vollständig gelöst.

Bei einer bevorzugten Weiterbildung ist eine zweite Antriebseinheit vorgesehen, die vorzugsweise im Bereich der Befüllposition vorgesehen ist und ausgelegt ist, zumindest die Aufnahmeeinheit des Magazins um einen Aufnahmeplatz relativ zu der Befülleinheit weiter zu bewegen, vorzugsweise zu drehen. Bevorzugt ist eine dritte Antriebseinheit vorgesehen, die vorzugsweise im Bereich der Übergabeposition vorgesehen und dem zweiten Element zugeordnet ist, um das zweite Element senkrecht und relativ zu dem ersten Element zu verlagern.

Diese Maßnahmen haben sich als besonders vorteilhaft herausgestellt. Das Bereitstellen mehrere Antriebseinheiten, die unabhängig voneinander arbeiten können, führt zu einer hohen Flexibilität der Vorrichtung.

Bei einer bevorzugten Weiterbildung weist die zweite Antriebseinheit und/oder die dritte Antriebseinheit jeweils ein Kupplungselement auf, das jeweils mit einem Kupplungsgegenstück lösbar kuppelbar ist. Alternativ ist die zweite Antriebseinheit und/oder die dritte Antriebseinheit fest am Trägerelement angebracht. Bevorzugt ist das Kupplungsgegenstück der zweiten Antriebseinheit eine Nockenscheibe und das Kupplungselement ein Rollenhalter mit einer oder mehreren Rollen, wobei durch senkrechtes Auf- und Ab-Bewegen des Rollenhalters die Nockenscheibe und damit die Aufnahmeeinheit um eine Position gedreht werden kann. Weiter bevorzugt ist eine Welle vorgesehen, die die Drehbewegung der Nockenscheibe auf die Aufnahmeeinheit überträgt.

Diese Maßnahmen haben sich als besonders vorteilhaft herausgestellt. Insbesondere die Verwendung einer Nockenscheibe mit außenliegenden Nuten, in denen Rollen laufen, führt zu einer mechanisch sehr stabilen und präzisen Drehbewegung, wobei der Drehwinkel fest durch die Nuten in der Nockenscheibe vorgegeben ist. Diese Lösung ist äußerst robust, da gegenüber digitalen Lösungen kein Referenzpunkt ermittelt werden muss.

Bei einer bevorzugten Weiterbildung ist das Kupplungsgegenstück der dritten Antriebseinheit eine Auflagefläche eines Übertragungselements, welches mit dem zweiten Element der Aufnahmeeinheit zusammenwirkt, und ist das Kupplungselement senkrecht verlagerbar, so dass die Hubbewegung des Kupplungselements eine entsprechende Bewegung des Übertragungselements und damit des zweiten Elements bewirkt. Bevorzugt weist das zweite Element eine Abstützeinheit mit darauf vorgesehenen Stangen auf, wobei das Übertragungselement mit der Abstützeinheit verbunden ist. Weiter bevorzugt ist das Übertragungselement durch die Welle gebildet. Bevorzugt ist der Außendurchmesser der Stangen an den Innendurchmesser der Aufnahmeplätze angepasst.

Diese Maßnahmen haben sich ebenfalls als besonders vorteilhaft herausgestellt. Insbesondere wird der mechanische Aufbau zum Anheben des zweiten Elements einfach und damit kostengünstig umsetzbar. Auch die Anpassung des zweiten Elements an eine geänderte Anzahl von Aufnahmeplätzen im ersten Element ist einfach möglich.

Bei einer bevorzugten Weiterbildung ist das Trägerelement als rechteckförmige Platte ausgebildet, auf der zwei Magazine an eine einander gegenüberliegenden Enden der Platte vorgesehen sind.

Diese Maßnahme hat den Vorteil, dass eine rechteckförmige Platte als Trägerelement eine geringe Masse aufweist und damit mit geringem Drehmoment zu bewegen ist.

Bei einer bevorzugten Weiterbildung ist das Trägerelement als runde Platte ausgebildet, wobei mehr als zwei Magazine in einem äußeren Randbereich der Platte vorgesehen sind, vorzugsweise in gleichmäßigen Winkelabständen zueinander.

Diese Maßnahme hat den Vorteil, dass ein Puffer von befüllten Magazinen vorhanden ist, sodass der Durchsatz erhöht werden kann.

Bei einer bevorzugten Weiterbildung ist das erste Element ein ringförmiges Element, wobei jeder Aufnahmeplatz zumindest abschnittsweise senkrecht verlaufende Innenflächen zur seitlichen Abstützung eines Bauteils aufweist und nach oben und unten offen ausgestaltet ist.

Diese Maßnahme ermöglicht einen einfachen und kostengünstigen Aufbau der Aufnahmeeinheit.

Die der Erfindung zugrunde liegende Aufgabe wird auch durch eine Vorrichtung zum Umsetzen von Bauteilen gelöst, wobei die Bauteile insbesondere durch eine Vorrichtung gemäß Anspruch 1 bereitgestellt werden. Die Vorrichtung weist folgende Merkmale auf: eine Handhabungseinrichtung, und ein Übergabemagazin, das mit der Handhabungseinrichtung koppelbar und von dieser in zumindest zwei Dimensionen, vorzugsweise drei Dimensionen, verfahrbar ist, wobei das Übergabemagazin aufweist: eine Aufnahmeeinheit, die mehrere Aufnahmeplätze für Bauteile, insbesondere Batteriezellen; eine Auswurfeinheit, die ausgelegt ist, ein in einem Aufnahmeplatz aufgenommenes Bauteil nach unten auszuwerfen; und eine erste Antriebseinheit, die ausgelegt ist, die Auswurfeinheit und/oder die Aufnahmeeinheit relativ zueinander zu bewegen, um die Auswurfeinheit jedem Aufnahmeplatz zuordnen zu können.

Einer der Vorteile dieser Vorrichtung liegt darin, dass Bauteile einzeln in das Endprodukt ablegbar sind, so dass jederzeit auf andere Anordnungen reagiert werden kann. Es ist also nicht erforderlich, bspw. das Übergabemagazin an die neue Anordnung anzupassen.

Die der Erfindung zugrundeliegende Aufgabe wird auch durch ein Verfahren zum Handhaben von Bauteilen gelöst, das folgende Schritte aufweist:
Einbringen von mehreren Bauteilen nacheinander in einzelne Aufnahmeplätze eines ersten Magazins, das in einer ersten Position, Befüllposition, positioniert ist, wobei nach jedem Einbringen eines Bauteils das erste Magazin bewegt, insbesondere gedreht, wird;
Übergabe aller Bauteile eines zweiten Magazins, das in einer zweiten Position, Übergabeposition, positioniert ist, an eine Handhabungseinrichtung während des Befüllens des ersten Magazins; und
Bewegen des gefüllten ersten Magazins in die Übergabeposition und gleichzeitiges Bewegen des zweiten geleerten Magazins in die Befüllposition.

Ferner wird die Aufgabe auch durch ein Verfahren zum Umsetzen von Bauteilen gelöst, das folgende Schritte aufweist:
gleichzeitiges Überführen mehrerer Bauteile in ein Übergabemagazin, das von einer Handhabungseinrichtung gehalten und in einer Übernahmeposition positioniert ist,
Verlagern des Übergabemagazins über ein Endprodukt mit einer Vielzahl von Aufnahmeplätzen für Bauteile; und
Ausbringen jeweils eines einzelnen Bauteils aus dem Übergabemagazins in einen definierten Aufnahmeplatz im Endprodukt und anschließendes Bewegen des Übergabemagazins zum nächsten Aufnahmeplatz bis alle Bauteile im Magazin ausgebracht sind oder das Endprodukt vollständig befüllt ist.

Die Vorteile der erfindungsgemäßen Verfahren entsprechen den Vorteilen der erfindungsgemäßen Vorrichtungen, so dass auf eine Wiederholung an dieser Stelle verzichtet werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
- Figur 1: ein Blockschaltbild zur Erläuterung des allgemeinen Aufbaus einer Anlage zum Befüllen eines Endprodukts;
- Figur 2: eine perspektivische Darstellung einer Befüllstation;
- Figur 3: eine Darstellung eines Endprodukts, insbesondere eines Batteriemoduls;
- Figur 4: eine schematische Darstellung der Anlage aus Fig. 1;
- Figur 5a, b: zwei perspektivische Darstellungen eines Taktbands in zwei unterschiedlichen Positionen;
- Figur 6a, b: zwei perspektivische Darstellungen einer Wendeeinheit als Teil der Anlage aus Fig. 1;
- Figur 7a-e: verschiedene Darstellungen einer Magazineinrichtung als Teil der Anlage aus Fig. 1;
- Figur 8: eine perspektivische Darstellung einer Handhabungseinrichtung;
- Figur 9: eine perspektivische Darstellung eines Übergabemagazins als Teil der Anlage aus Figur 1;
- Figur 10: eine Schnittdarstellung des Übergabemagazins aus Figur 9; und
- Figur 11: eine perspektivische Darstellung einer Einheit mit Klemmelementen.

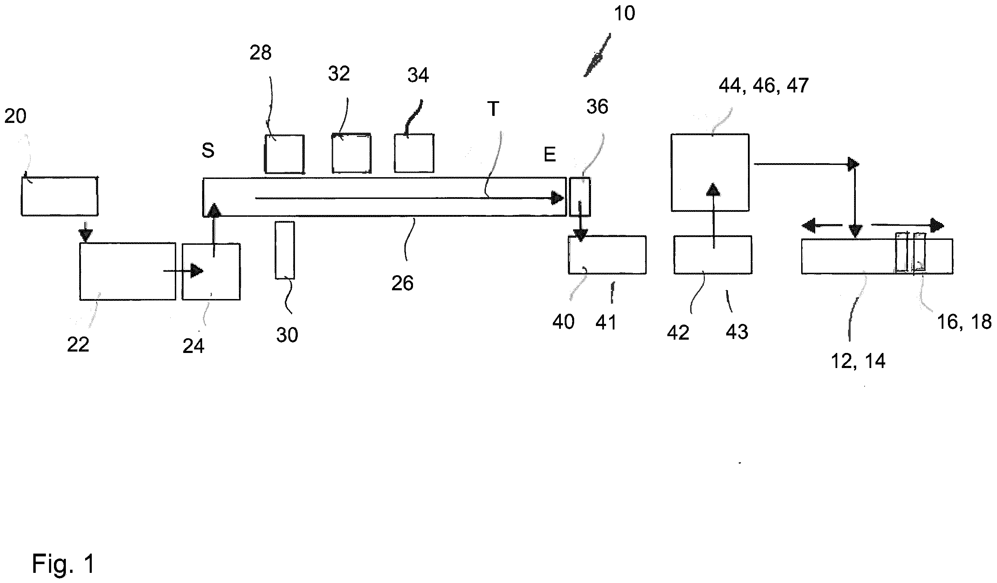

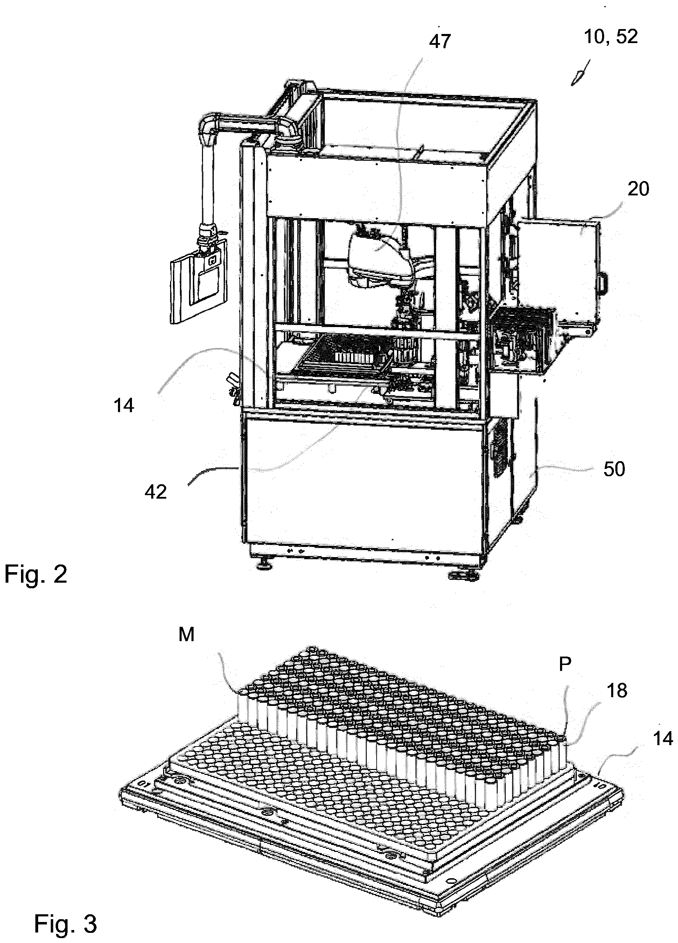

In Figur 1 ist in schematischer Darstellung eine Anlage zum Befüllen eines Endprodukts mit Bauteilen dargestellt und mit dem Bezugszeichen 10 gekennzeichnet. Die Anlage 10 ist in Form von einzelnen Funktionsblöcken dargestellt, um den Ablauf der Befüllung eines Endprodukts einfacher erläutern zu können. Einzelne dieser Funktionsblöcke werden dann anhand der nachfolgenden Figuren 2 bis 11 im Detail erläutert.

Die Anlage 10 dient insbesondere dazu, ein Endprodukt 12, insbesondere ein Batteriemodul 14, mit einer Vielzahl von vorzugsweise zylindrischen Bauteilen 16, insbesondere zylindrischen Batteriezellen 18 (nachfolgend kurz Zellen genannt) zu befüllen. Handelt es sich um ein Batteriemodul 14 werden die Zellen 18 in bestimmte Aufnahmeplätze mit einer bestimmten Pol-Lage (Plus-Pol oder Minus-Pol nach oben) eingesetzt. An dieser Stelle sie angemerkt, dass der Begriff "Bauteil" nicht nur Batteriezellen umfasst, sondern bspw. auch Gehäuse allgemeiner Art, wie Gehäuse für Injektionssysteme oder Spritzenkörper, um nur zwei Beispiele zu nennen.

Obgleich die Anlage 10 nicht nur zur Verarbeitung bzw. zur Handhabung von Batteriezellen 18 geeignet ist, wird nachfolgend nurmehr auf diese Ausführungsform Bezug genommen. Es versteht sich jedoch, dass die Anlage auch für andere Bauteile, insbesondere zylindrische Bauteile benutzt werden kann.

Die Zellen 18 werden von außen mittels eines Transportmagazins 20 der Anlage 10 zugeführt. In diesem Transportmagazin 20 können die Zellen 18 hinsichtlich ihrer Pol-Lage geordnet oder ungeordnet gelagert sein. Für die Anlage spielt das keine Rolle.

Die einzelnen Zellen 18 werden aus dem Transportmagazin 20 von einer Vereinzelungseinrichtung 22 herausgenommen und zu einem Ausschieber 24 geführt. Der Ausschieber 24 dient dazu, getaktet nacheinander Zellen 18 auf ein Taktband 26 zu überführen. Das kann beispielsweise durch einfaches horizontales Verschieben der Zelle 18 auf das Taktband 26 erfolgen. Die Zellen 18 liegen dann in vorgesehenen Aufnahmeplätzen im Taktband 26 (wird nachfolgend noch genauer erläutert), wobei die Längsachsen der Zellen 18 waagrecht und rechtwinklig zur Transportrichtung liegen.

Das Taktband 26 ist so ausgelegt, dass es die einzelnen Zellen 18 taktweise von einem Aufnahmeplatz zum nächsten nachfolgenden Aufnahmeplatz transportiert, solange bis die Zelle 18 den Endbereich E des Taktband 26 erreicht hat. Die Zellen 18 werden folglich getaktet vom Bereich S 25 zu dem Bereich E 27 transportiert.

Die Anzahl der Aufnahmeplätze im Taktband 26 hängt insbesondere davon ab, wie viele Prüf- und Funktionstests während des Transports an jeder Zelle ausgeführt werden müssen. Im vorliegenden Ausführungsbeispiel sind es beispielsweise drei Prüf- bzw. Funktionstests, die an der Zelle 18 vorgenommen werden.

Am Anfang des Taktband 26 ist beispielsweise ein Code-Leser 28 vorgesehen, der einen auf der Zelle aufgedruckten Code für die Weiterverarbeitung ausliest. Um den Code sicher auslesen zu können, ist eine Dreheinheit 30 an diesem Aufnahmeplatz vorgesehen, die die Zelle um ihre Längsachse dreht.

Am nächsten Aufnahmeplatz des Taktbands 26 ist eine Prüfungseinheit 32 vorgesehen, die verschiedene elektrische Tests an der Zelle 18 vornehmen kann. Dabei wird beispielsweise die Lage des Minus-Pols bzw. des Plus-Pols bestimmt sowie die elektrische Funktionsfähigkeit der Zelle überprüft.

Am nächsten Aufnahmeplatz des Taktbands 26 ist eine Ausschleuseinheit 34 vorgesehen, die abhängig von dem vorherigen Funktionstest die Zelle ausschleust oder nicht. Beispielsweise wird über einen Schieber die nicht funktionsfähige Zelle vom Taktband 26 in ein Auffangbehältnis geschoben.

Im Endbereich 27 des Taktbands 26 wird die Zelle in eine Befüll- bzw. Wendeeinheit 36 (nachfolgend nur Wendeeinheit genannt) überführt, die die Zelle abhängig von der zuvor festgestellten Pol-Lage um 90° im Uhrzeigersinn oder gegen den Uhrzeigersinn dreht. Nach einer solchen Drehung ist die Zelle 18 in einer senkrechten Position und kann so beispielsweise nach unten in ein sich darunter befindliches erstes Magazin 40 überführt werden. Bevorzugt fällt die Zelle durch Gewichtskraft nach unten in einen Aufnahmeplatz des ersten Magazins 40. Es versteht sich, dass das Magazin 40, bzw. der entsprechende Aufnahmeplatz zur Wendeeinheit 36 ausgerichtet sein muss.

Das erste Magazin 40 wird anschließend so bewegt, dass der nächste Aufnahmeplatz unter der Wendeeinheit 36 zu liegen kommt, sodass beim nächsten Takt die nächste Zelle in der Wendeeinheit gedreht und dann nach unten ausgebracht werden kann. Durch das Drehen der Zelle in der Wendeeinheit entweder um 90° oder -90°, lässt sich die Zelle gesteuert in jeder der beiden Pol-Lagen übergeben, also Plus-Pol nach oben oder nach unten.

Dieser Vorgang wiederholt sich so lange bis vorzugsweise alle Aufnahmeplätze im ersten Magazin 40 mit Zellen 18 gefüllt sind.

Während dem Einbringen von Zellen 18 in das erste Magazin 40 werden alle Zellen 18 in einem zweiten Magazin 42, das zuvor befüllt wurde, in ein Übergabemagazin 44 übergeben. Dieses Übergabemagazin 44 ist an das erste beziehungsweise das zweite Magazin 40, 42 angepasst, dergestalt, dass Aufnahmeplätze für Zellen 18 gleich positioniert sind wie die Aufnahmeplätze in den beiden Magazinen 40, 42. D. h. mit anderen Worten, dass bei einer entsprechenden Ausrichtung des Übergabemagazins 44 zum zweiten Magazin 42 die Zellen 18 aus dem zweiten Magazin 42 beispielsweise nach oben in die entsprechenden Aufnahmeplätze des Übergabemagazins 44 beispielsweise eingeschoben werden können.

Das Übergabemagazin 44 ist an einer Handhabungseinrichtung 46, beispielsweise in Form eines Roboters 47, lösbar angebracht. Die Handhabungseinrichtung 46 führt nach dem Befüllen mit den Zellen 18 in das Übergabemagazin 44 dieses zu dem Batteriemodul 14 und setzt einzeln jede Zelle in den im Modul vorgesehenen Aufnahmeplatz ein.

Mithilfe der Handhabungseinrichtung 46 ist es möglich, dass das Batteriemodule 14 selbst ortsfest in der Anlage 10 positioniert ist und sich lediglich das Übergabemagazin 44 bewegt, d. h. von Aufnahmeplatz zu Aufnahmeplatz im Batteriemodule 14 verfahren wird. Sobald alle Zellen 18 aus dem Übergabemagazin 44 ausgebracht sind, wird es von der Handhabungseinrichtung 46 wieder zurück zum zweiten Magazin 42 bewegt.

Es zeigt sich folglich, dass das erste Magazin 40, welches sich zum Befüllen durch die Wendeeinheit 36 in einer Befüllposition 41 befindet, schrittweise bzw. taktweise befüllt, und anschließend, wenn der gewünschte Befüllgrad erreicht ist, in eine Übergabeposition 43, die beabstandet ist von der Befüllposition 41, bewegt wird. In dieser Übergabeposition 43 wird das Magazin dann vorzugsweise auf einmal vollständig entleert. Dass sich zuvor in der Übergabeposition 43 befundene zweite Magazin 42 wird dann in die Befüllposition 41 gebracht. D. h. mit anderen Worten, dass die beiden vorhandenen Magazine 40, 42 ihre Positionen immer dann wechseln, wenn das Magazin in der Befüllposition 41 vorzugsweise vollständig mit Zellen 18 befüllt ist.

An dieser Stelle sei jedoch darauf hingewiesen, dass die Anlage 10 auch mehr als die beiden gezeigten Magazine 40, 42 aufweisen kann. Sind mehr als zwei Magazine vorhanden, so gelangt das Magazin aus der Befüllposition 41 nicht unmittelbar in die Übergabeposition 43, sondern wird zuvor in ein oder mehrere Wartepositionen verfahren.

Einige der zuvor erläuterten Funktionsblöcke werden nachfolgend im Detail beschrieben. Dabei wird eine beispielhafte technische Ausgestaltung des Funktionsblocks dargestellt, wobei an dieser Stelle anzumerken ist, dass die vorgenannten Funktionen der Funktionsblöcke selbstverständlich auch mit anderen technischen Mitteln erreichbar sind.

In Figur 2 ist die Anlage 10 in einem Gehäuse 50 untergebracht, um eine Befüllstation 52 auszubilden. Diese Befüllstation 52 kann Teil einer größeren Anlage sein, die aus mehreren Stationen gebildet ist. So kann beispielsweise vor und nach der Befüllstation 52 jeweils eine Station vorgesehen sein, wobei die Stationen dann über eine Transportvorrichtung miteinander verbunden sind. Auf dieser Transportvorrichtung kann das Batteriemodule 14 durch die verschiedenen Stationen transportiert werden, wobei in der Befüllstation 52 beispielsweise die Batteriezellen 18 eingesetzt werden und in einer nachfolgenden Station dann eine elektrische Verbindung der einzelnen Zellen erfolgen kann.

Zu erkennen ist in Figur 2 das Transportmagazin 20, dass in eine entsprechende Aufnahme von außen eingesetzt werden kann. Dieses Transportmagazin 20 ist mit den Zellen 18 gefüllt, wobei die Pol-Lage der Zellen dabei unerheblich ist.

Weiter zu erkennen ist der Roboter 47, der die Zellen aus dem zweiten Magazin 42 übernimmt und in das Batteriemodul 14 einsetzt. In Figur 3 ist ein beispielhafter Aufbau eines Batteriemoduls 14 dargestellt, wobei für die Aufnahme der Zellen 18 Aufnahmeplätze in einer Platte bzw. einem Batteriemodulgehäuse vorgesehen sind. Zu erkennen ist, dass die Pol-Lagen P, M der Zellen 18 geordnet aber nicht gleich sind. So wechseln sich Zell-Reihen mit Plus-Pol nach oben und Reihen mit Minus-Pol nach oben ab. Diese Ausrichtung der Pol-Lagen ist jedoch immer anwendungsbezogen, und kann entsprechend abweichen. Aufgrund der Tatsache, dass die Pol-Lage über die Prüfungseinheit 32 bestimmt werden kann, weiß die Anlage 10, in welche Richtung die Wendeeinheit 36 die entsprechende Zelle drehen muss, um dann am Ende im Batteriemodul 14 die richtige Pol-Lage zu erzielen.

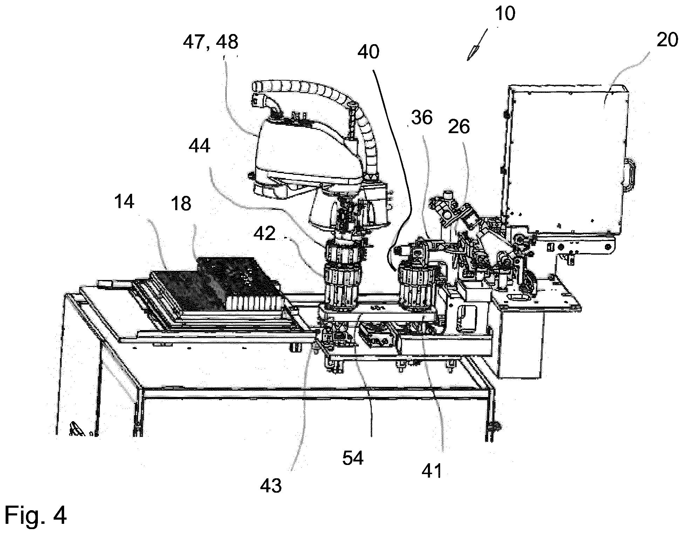

In Figur 4 ist die Befüllstation 52 nochmals ohne umgebendes Gehäuse 50 dargestellt. Deutlich zu erkennen sind hier die beiden Magazine 40,42, die auf einem balkenförmigen bzw. rechteckförmigen Trägerelement 54 vorgesehen sind. Dieses Trägerelement 54 ist um eine senkrechte Achse drehbar gelagert, sodass ein Hin- und Herbewegen der Magazine 40, 42 zwischen der Befüllposition 41 und der Übergabeposition 43 erfolgen kann. Bevorzugt wird das Trägerelement jeweils um etwa 180° gedreht, so dass Befüllposition 41 und Übergabeposition 43 etwa entsprechend der Länge des Trägerelements beabstandet sind und auf einer Linie liegen.

Ferner ist in dieser Figur die Wendeeinheit 36 zu erkennen, die oberhalb des Magazins 40, das sich in der Befüllposition 41 befindet, angeordnet ist, sodass eine Zelle nach unten in eine Aufnahme des Magazins 40 fallen kann.

In Figur 4 ist schließlich noch zu erkennen, dass sich das Übergabemagazin 44 am Roboter 47 unmittelbar oberhalb des zweiten Magazins 42 befindet, wobei das Übergabemagazin 44 vorzugsweise genauso viele Aufnahmeplätze für Zellen besitzt wie das Magazin 42. Zur Übergabe der im zweiten Magazin 42 befindlichen Zellen 18 sind die entsprechenden Aufnahmeplätze der beiden Magazine 42, 44 zueinander ausgerichtet, sodass die Zellen aus dem zweiten Magazin 42 nach oben in die Aufnahmeplätze im Übergabemagazin 44 geschoben werden können. Dieser Vorgang und die entsprechende Ausgestaltung der beiden Magazine wird später noch im Detail erläutert werden.

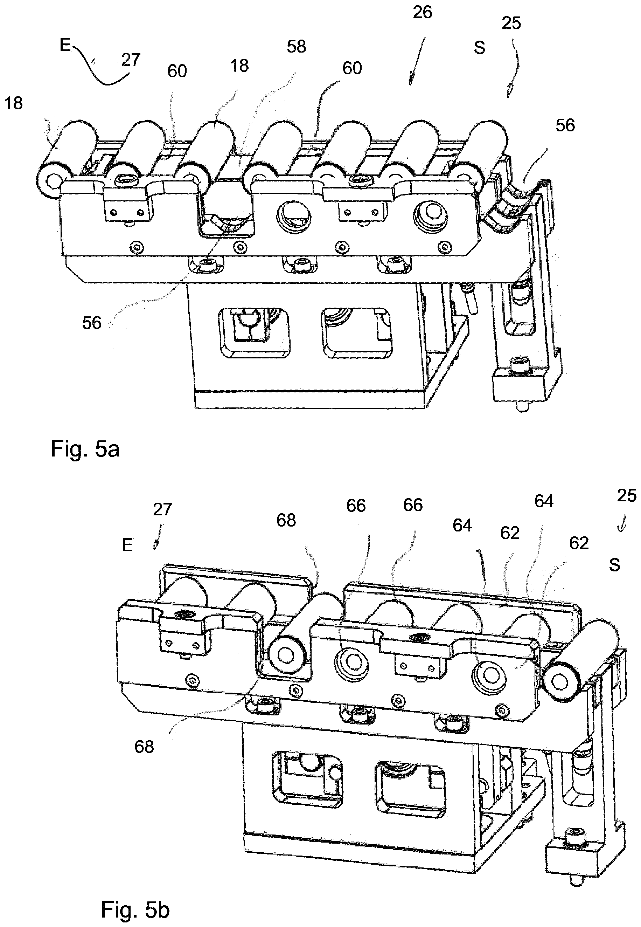

In den Figuren 5a, b ist das Taktband 26 in größerem Detailgrad dargestellt. Wie zuvor bereits kurz erwähnt, dient das Taktband 26 dazu, Zellen 18 getaktet von einem Startbereich 25 zu einem Endbereich 27 zu transportieren, wobei die Zellen nach jedem Takt in dafür vorgesehene Aufnahmepositionen 56 gelegt werden. Im vorliegenden Ausführungsbeispiel weist das Taktband 26 insgesamt sieben Aufnahmepositionen 56 auf, die gleichmäßig beabstandet in Transportrichtung vorgesehen sind.

Der Transport selbst erfolgt über einen Zellenmitnehmer 58, der ebenfalls Aufnahmen 60 für Zellen 18 besitzt. Im vorliegenden Ausführungsbeispiel besitzt der Zellenmitnehmer 58 insgesamt sechs Aufnahmen 60. Der Zellenmitnehmer 58 bewegt sich auf einer ovalen Bahn, d. h. dass der Zellenmitnehmer 58 eine Zelle mittig anhebt, dann um eine Position weitertransportiert, dann nach unten fährt, um die Zelle in eine Aufnahmeposition 56 anzulegen, dann etwas weiter nach unten und schließlich wieder zurück in die Ausgangsposition fährt. Im Endbereich 27 wird die Zelle, die in der letzten Aufnahmeposition 56 liegt, dann über den Zellenmitnehmer 58 ausgeworfen und in die Wendeeinheit 36 überführt.

Wie bereits erwähnt, werden die Zellen 18, wenn sie in verschiedenen Aufnahmepositionen 56 liegen, optisch abgetastet oder elektrisch überprüft, wobei dies nur zwei von vielen möglichen Funktion- und Prüftests sind. Zum optischen Scannen einer Zelle 18 sind in seitlich begrenzenden Seitenwänden 62 einander gegenüberliegende Öffnungen 64 vorgesehen, die der Dreheinheit 30 ermöglichen, die Zelle in der Aufnahmeposition 56 zu drehen. Ein auf der Zelle 18 auf gedruckter Code kann so auf einfache Weise optisch erfasst werden.

In der übernächsten Aufnahmeposition sind zwei weitere Öffnungen 66 in den Seitenwänden 62 vorgesehen, die es ermöglichen, die beiden Pole der Zelle 18 elektrisch zu kontaktieren, sodass über die Prüfungseinheit 32 ein elektrischer Test durchgeführt werden kann.

In der nächsten Aufnahmeposition 56 sind in den Seitenwänden 62 rechteckförmige Ausschnitte 68 vorgesehen, die der Ausschleuseinheit 34 ein Ausschleusen aus der Aufnahmeposition 56 in ein nicht dargestelltes Behältnis ermöglicht. Der Vorgang des Ausschleusen erfolgt dabei abhängig von der zuvor durchgeführten elektrischen Prüfung der Zelle.

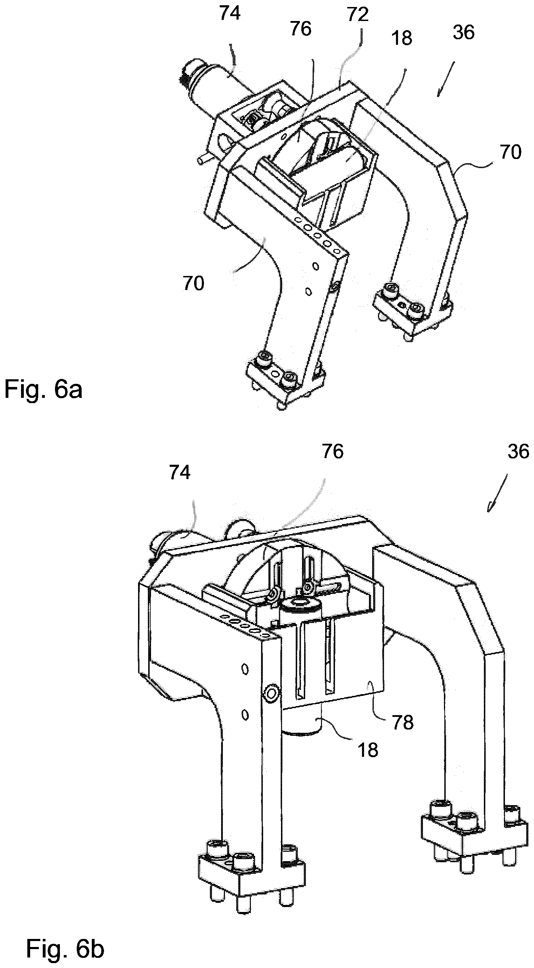

In den beiden Figuren 6a und 6b ist die Wendeeinheit 36 in zwei unterschiedlichen Perspektiven und Positionen einer aufgenommenen Zelle 18 dargestellt. Die Wendeeinheit 36 weist zwei Winkelträger 70 auf, die eine Trägerplatte 72 tragen. Der Abstand der beiden Winkelträger 70 ist etwas größer als die Breite des Taktbands 26, sodass dieses in den Freiraum zwischen den beiden Winkelträger ganz 70 eintauchen kann. An der senkrecht stehenden Trägerplatte 72 ist ein Motor 74, insbesondere ein Schrittmotor mit Encoder, vorgesehen, der über eine nicht sichtbare Welle mit einer runden Halteplatte 76 verbunden ist. Es ist zu erkennen, dass der Motor 74 und die Halteplatte 76 auf einander gegenüberliegenden Seiten der Trägerplatte 72 angeordnet sind. Die Halteplatte 76 dient dazu, eine in waagrechter Position zugeführte Zelle 18 in eine senkrechte Position, die in Figur 6b dargestellt ist, zu drehen. Die Drehung der Halteplatte 76 erfolgt dabei um 90° entweder im Uhrzeigersinn oder im Gegenuhrzeigersinn. Die Drehrichtung hängt davon ab, ob der Plus-Pol der Zelle 18 in ihrer senkrechten Position unten oder oben liegen soll.

Die Halteplatte 76 ist zumindest teilweise umgeben von einem gehäuseartigen Element 78, dessen obere Seite offen ist, sodass eine Zelle 18 von oben in das Gehäuse 78 gelangen kann, während die Unterseite lediglich eine kreisrunde Öffnung aufweist, deren Durchmesser etwas größer ist als der Durchmesser der Zelle 18. Die Öffnung ist mittig angeordnet derart, dass die Zelle in ihrer senkrechten Position nach unten durch die Öffnung fallen kann. In Figur 6b ist dies dadurch angedeutet, dass ein unterer Abschnitt der Zelle 18 aus dem Element 78 vorsteht. Dieser Übergabevorgang in das erste Magazin 40 erfolgt alleine durch das Eigengewicht der Zelle 18 dann, wenn die senkrechte Position exakt erreicht ist.

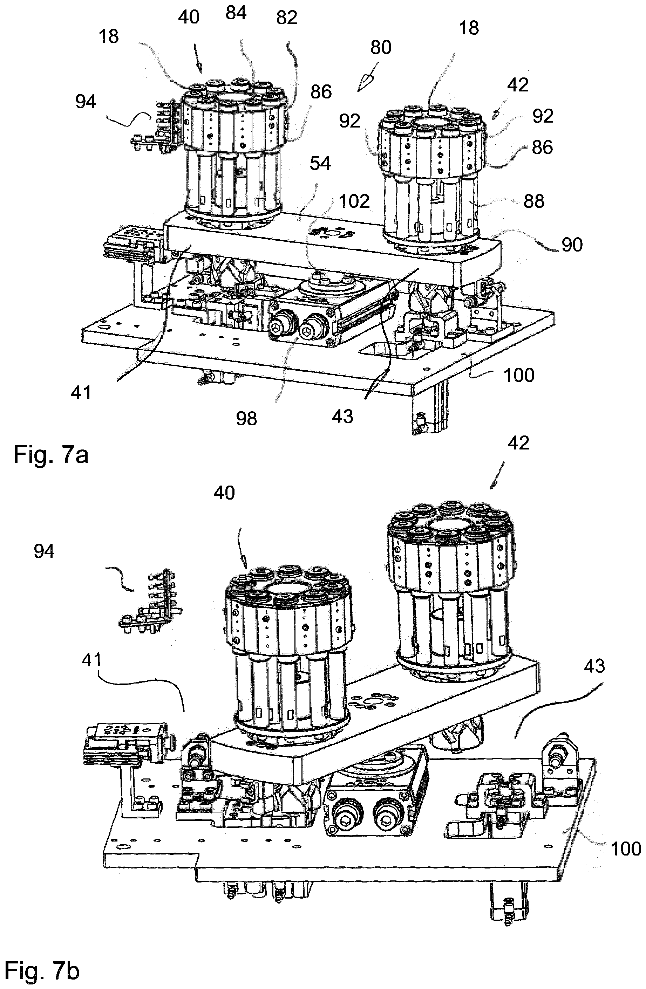

In den Figuren 7a bis 7e wird nachfolgend im Detail eine Magazineinrichtung 80 erläutert, die unter anderem die beiden Magazine 40,42 und das Trägerelement 54 aufweist.

Das Magazin 40, wie auch das baugleiche Magazin 42, weist eine Aufnahmeeinheit 82 auf, die eine Vielzahl von Aufnahmeplätzen 84 für Zellen 18 besitzt. Im vorliegenden Ausführungsbeispiel weist die Aufnahmeeinheit 82 insgesamt zehn Aufnahmeplätze 84 für zehn Zellen 18 auf.

Die Aufnahmeeinheit 82 umfasst ein ringförmiges erstes Element 86, dass im Wesentlichen dazu dient, die Aufnahmeplätze seitlich, also in horizontaler Richtung zu begrenzen. D. h. mit anderen Worten, dass jeder der Aufnahmeplätze 84 im ersten Element 86 durch jeweils eine zylindrische Wand mit kreisförmigem Querschnitt ausgebildet ist. Um die in den Aufnahmeplätzen 84 liegenden Zellen 18 in senkrechter Richtung abzustützen, ist ein zweites Element 88 vorgesehen, das mehrere auf einer Abstützplatte 90 vorgesehene Stangen 89 umfasst. Die Stangen 89 des zweiten Elements 88 sind gleichmäßig beabstandet zueinander auf einer Kreislinie auf der Abschlussplatte 90 angeordnet und sind koaxial zu den Aufnahmeplätzen 84 ausgerichtet.

Wichtig beim Aufbau der Aufnahmeeinheit 82 ist, dass die beiden Elemente 86 und 88 relativ zueinander in senkrechter Richtung verlagerbar sind. Im vorliegenden Ausführungsbeispiel ist das zweite Element 88 beispielsweise über die Abstützplatte 90 nach oben verlagerbar, sodass die Stangen 89 in die Aufnahmeplätze 84 im ersten Element 86 eintauchen können. Gleiches wäre natürlich auch erreichbar, wenn das erste Element 86 nach unten verlagert würde. Auch dann tauchen die Stangen in die Aufnahmeplätze ein. Zudem wäre auch eine Kombination denkbar. Diese relative Verlagerbarkeit der beiden Elemente 86 und 88 dient dazu, die in einem Magazin 40, 42 platzierten Zellen 18 aus einer Aufnahmeposition in eine Übernahmeposition zu bringen, um sie so dem Übergabemagazin 44 übergeben zu können. Dabei kann die Aufnahmeposition räumlich gesehen mit der Übernahmeposition übereinstimmen, wenn das erste Element nach unten bewegt wird. Wird das zweite Element nach oben bewegt, verändert sich hingegen die räumliche Position der Zellen, so dass Aufnahmeposition und Übernahmeposition räumlich nicht übereinstimmen.

An der Außenseite des ersten Element 86 sind Codierungselemente 92 vorgesehen, die stiftartig nach außen ragen. Mithilfe dieser Codierungselemente 92 und einem entsprechenden Sensorelement 94 kann erfasst und bestimmt werden, welcher Aufnahmeplatz an welcher Position liegt. Mithilfe der Funktionseinheiten im Bereich des Taktbands 26 und dem Sensorelement 94 weiß die Anlage folglich genau, welche Zelle in welcher Pol-Lage in einem bestimmten Aufnahmeplatz 84 eines Magazins 40,42 liegt. Diese Information ist insbesondere später beim Befüllen des Batteriemoduls 14 von Bedeutung.

Neben dem Sensorelement 94 ist ein weiteres Sensorelement 95 vorgesehen, dass bspw. mechanisch erfassen kann, ob sich im Aufnahmeplatz eine Zelle 18 befindet.

Dem Trägerelement 54 ist eine erste Antriebseinheit 98 zugeordnet, die beispielsweise einen Elektromotor aufweist. Die erste Antriebseinheit 98 ist auf einer Platte 100 befestigt und mit dem Trägerelement 54 über eine Welle 102 verbunden. Die Welle 102 stützt das Trägerelement 54 mittig ab. In Figur 7b ist dargestellt, dass die erste Antriebseinheit 98 das Trägerelement 54 und damit die beiden Magazine 40,42 bei einer Drehung um 180° aus der Befüllposition 41 in die Übergabeposition 53 und umgekehrt überführen kann.

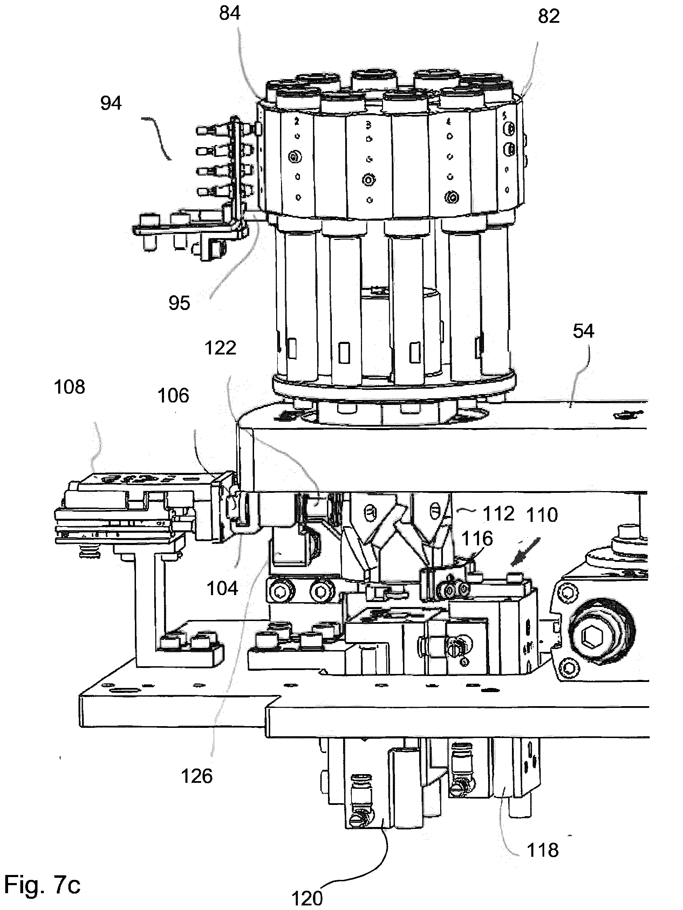

Aus Figur 7c wird ersichtlich, dass das Trägerelement 54 am Längsende an seiner Unterseite ein Klammerelement 104 aufweist, das mit einem Bolzen 106 einer Verriegelungseinrichtung 108 zusammen wirken kann. Der Bolzen 106 in der Verriegelungseinrichtung 108 kann aus- und eingefahren werden, um so eine Verriegelung bzw. Freigabe zwischen Bolzen 106 und Klammerelement 104 zu erreichen. Erreicht das Trägerelement 54 seine exakte Position wird der Bolzen 106 eingezogen und verriegelt somit das Trägerelement 54 hinsichtlich seiner Position. Eine Positionsänderung des Trägerelements 54 ist dann nicht mehr möglich.

Wie bereits zuvor erwähnt, wird über die Wendeeinheit 36 pro Takt jeweils eine Zelle in einen Aufnahmeplatz 84 eines Magazins 40 geführt. Um alle Aufnahmeplätze 84 zu befüllen, ist es erforderlich, die Aufnahmeeinheit 82, im vorliegenden Ausführungsbeispiel um 36°, zu drehen, sodass der nächste Aufnahmeplatz 84 in die Position kommt, in der die Öffnung im Element 78 der Wendeeinheit 36 exakt ausgerichtet ist zu dem entsprechenden Aufnahmeplatz 84.

Es ergibt sich daraus, dass der Antrieb der Aufnahmeeinheit 82 eine exakte Positionierung erlauben muss, wobei hierfür technisch verschiedene Lösungen denkbar sind. Im vorliegenden Ausführungsbeispiel wird diese schrittweise Drehbewegung der Aufnahmeeinheit 82 über eine zweite Antriebseinheit 110 bewerkstelligt.

Diese zweite Antriebseinheit 110 umfasst eine Nockenscheibe 112, die an ihrer Außenseite Nuten 114 aufweist. Die Nuten 114 wirken mit Rollen zusammen, die an einem Rollenträger bzw. Träger 116 angebracht sind. Der Träger selbst ist an einem Taktschlitten 118 angebracht, der wiederum über einen Antrieb, beispielsweise einen Zylinder 120 in senkrechter Richtung auf und ab gefahren werden kann. Beim Auf und Abfahren des Taktschlitten 118 bewegen sich die Rollen am Träger 116 in den Nuten 114. Der Verlauf der Nuten 114 ist nun so ausgelegt, dass sich die Nockenscheibe 112 bei einer Taktbewegung (Bewegung nach unten bzw. Bewegung nach oben um eine vorbestimmte Wegstrecke) um einen vordefinierten Drehwinkel dreht. Dieser Drehwinkel ist festgelegt durch den Abstand der Aufnahmeplätze 84. Gibt es, wie im vorliegenden Ausführungsbeispiel, zehn Aufnahmeplätze 84, beträgt der Drehwinkel 36°.

Soll am Ende des Befüllens das Trägerelement 54 gedreht werden, kann der Träger 116 mit den Rollen weiter nach unten gefahren werden, um die Rollen außer Eingriff mit den Nuten zu bringen.

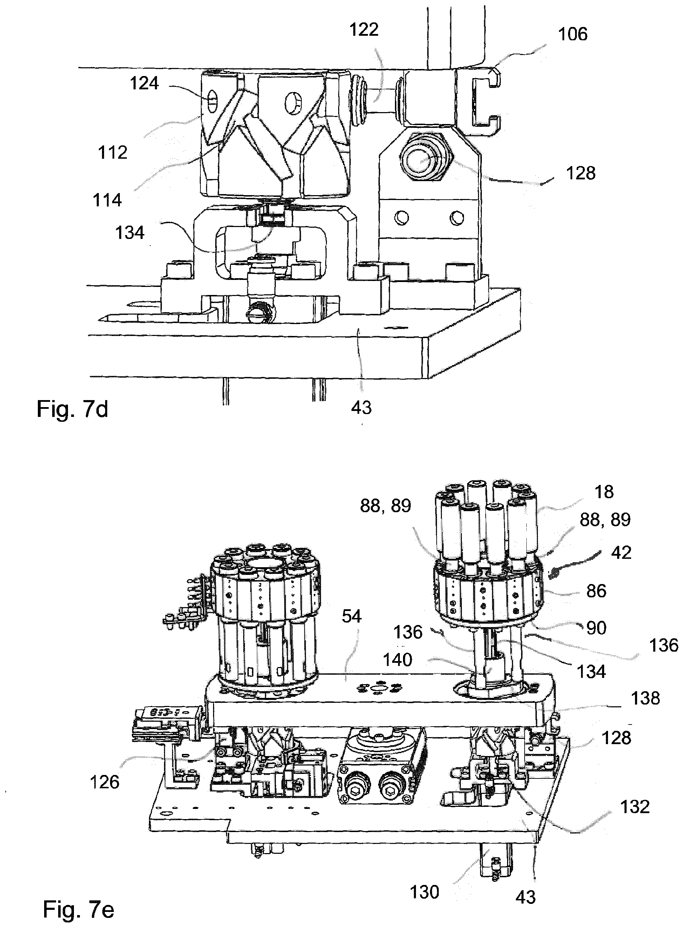

Wie zuvor bereits erwähnt, sorgt die Verriegelungseinrichtung 108 über den Bolzen 106 für eine Verriegelung des Trägerelements 54 in der vorgegebenen Position. Gleichzeitig mit dem Verriegeln wird ein Arretierbolzen 122 nach außen gezogen, dadurch, dass er mit dem Klammerelement 104 gekoppelt ist. Dabei wird der Arretierbolzen 122 aus einer Bohrung 124 (vergleiche Figur 7d) in der Nockenscheibe 112 gezogen. Damit wird die Nockenscheibe für eine Drehung freigegeben. So lässt sich die Nockenscheibe 112, die mit der Aufnahmeeinheit 82 gekoppelt ist, frei bewegen.

Soll nun das Trägerelement 54 gedreht werden, bewegt die Verriegelungseinrichtung 108 den Bolzen 106 nach außen, so dass der Arretierbolzen 122 bedingt durch eine nicht sichtbare Feder in die Bohrung 124 der Nockenscheibe 112 gedrückt wird. Damit ist die Nockenscheibe 112 und damit die Aufnahmeeinheit 82 drehfest verriegelt. Eine versehentliche Drehung der Aufnahmeeinheit 82 während der Überführung in die Übergabeposition lässt sich damit verhindern.

In Figur 7c ist noch eine senkrecht nach unten stehende Anschlagplatte 126 zu erkennen, die an der Unterseite des Trägerelements 54 vorgesehen ist. Die Anschlagplatte 126 wirkt mit einem Dämpfungselement 128 zusammen, dass an der Platte 100 vorgesehen ist. Auf der Platte 100 sind zwei dieser Dämpfungselemente 128 vorgesehen, dergestalt, dass sie mit der Anschlagplatte 126 in der Befüllposition und/oder der Übergabeposition zusammenwirken können. Bevorzugt sind zwei Anschlagplatten 126 an gegenüberliegenden Seiten des Trägerelements 54 vorgesehen, sodass der Bewegungsweg des Trägerelements 54 auf 180° begrenzt ist. Die beiden Dämpfungselemente 128 begrenzen einerseits die Drehbewegung und dämpfen andererseits das Trägerelement 54 beim Erreichen der jeweiligen Position ab. In Figur 7d ist die Anschlagplatte 126 versteckt hinter dem Dämpfungselement 128, während auf der gegenüberliegenden Seite die Anschlagplatte 126 sichtbar ist, also vor dem Dämpfungselement liegt (vergleiche Figur 7e).

in Figur 7e ist das zweite Magazin 42 in einem Zustand gezeigt, bei dem die Zellen 18, die sich in einer Aufnahmeposition befinden, aus den Aufnahmeplätzen 84 herausgeschoben sind und sich dann in einer Übernahmeposition befinden. Aus Übersichtlichkeitsgründen ist in dieser Darstellung jedoch das Übergabemagazin 44 nicht gezeigt. Um die Zellen 18 aus den Aufnahmeplätzen 84 herauszuschieben, wird die Abstützplatte 90 nach oben verlagert, sodass die Stäbe 89 des zweiten Elements 88 von unten in die Aufnahmeplätze 84 eintauchen und entsprechend die Zellen 18 nach oben bewegen.

Zur Bewegung der Abstützplatte 90 ist eine dritte Antriebseinheit 130 vorgesehen, die beispielsweise einen Hubzylinder 132 aufweist, der senkrecht nach oben und unten bewegbar ist. Der Hubzylinder 132 ist über Kupplungselemente koppelbar mit einer Welle 134, die sich durch die Nockenscheibe 112 erstreckt und mit der Abstützplatte 90 verbunden ist. In dieser Position sind stabförmige Elemente 136 zu erkennen, die mit einer Platte 138 verbunden sind und das erste Element 86 abstützen. Gleichzeitig ist die Platte 138 und die Elemente 136 mit einer Hohlwelle 140 verbunden, die drehfest mit der Nockenscheibe 112 verbunden ist.. Wird der Hubzylinder 132 nach oben bewegt, wird diese Bewegung auf die Welle 134 übertragen die wiederum die Abstützplatte 90 nach oben bewegt. Das erste Element 86 der Aufnahmeeinheit 82 verändert dabei ihre Lage nicht, sondern wird über die Elemente 136 und 138 drehbar aber nicht nach oben oder unten verlagerbar gehalten.

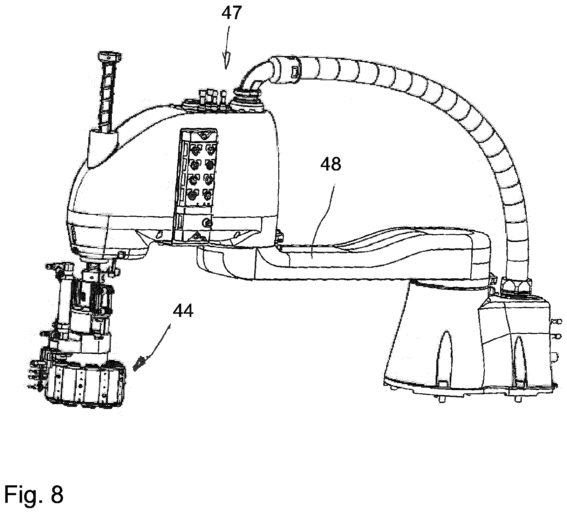

In Figur 8 ist die Handhabungseinrichtung 46 beispielhaft in Form eines Roboters 47 dargestellt. Dieser Roboter 47 trägt an seinem Arm 48 wechselbar das Übergabemagazin 44. Der Roboter 47 ermöglicht eine Bewegung des Übergabemagazin 44 in drei Dimensionen, wobei zusätzlich eine Drehung des Übergabemagazin 44 möglich ist. Wie zuvor bereits erwähnt, kann der Roboter 47 das Übergabemagazin 44 zunächst in die Übergabeposition 44 oberhalb des zweiten Magazins 42 fahren, und nach Übernahme der Zellen 18 zu dem Batteriemodule 14, wo dann jeder Aufnahmeplatz im Batteriemodul anfahrbar ist.

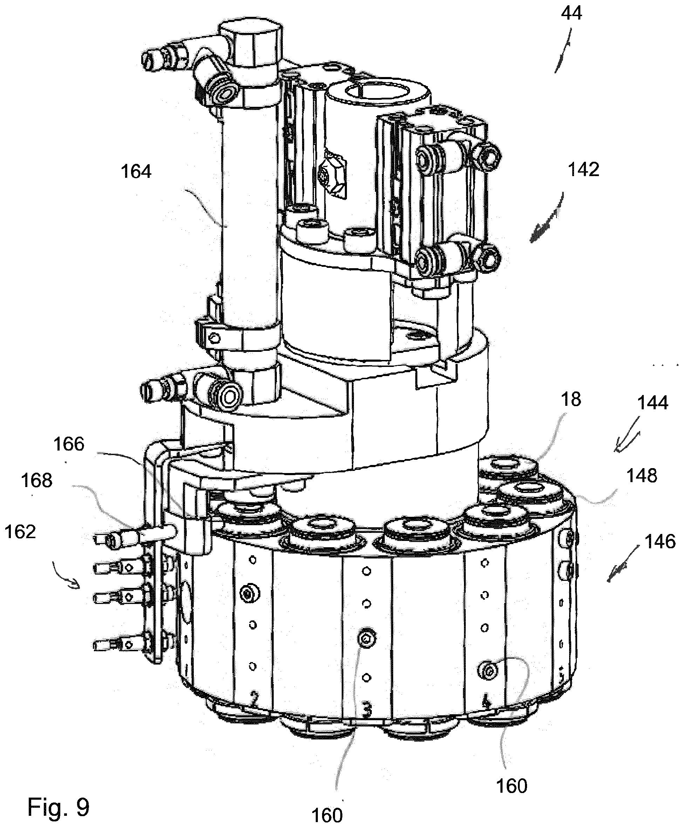

Das Übergabemagazin 44 ist im Detail in Figur 9 dargestellt. Das Übergabemagazin 44 besteht aus einem ersten Abschnitt 142, der zur lösbaren Ankopplung an eine Aufnahme am Roboterarm 48 ausgebildet ist. In einem darunterliegenden zweiten Abschnitt 144 ist eine Aufnahmeeinheit 146 vorgesehen, die relativ zu dem ersten Abschnitt 142 drehbar ist. Die Aufnahmeeinheit 146 hat einen ähnlichen Aufbau wie die Aufnahmeeinheit 82, d.h. wie das erste Element 86. Die Aufnahmeeinheit 146 weist Aufnahmeplätze 148 auf, die gleichmäßig beabstandet zueinander auf einer Kreislinie liegen. Die Anzahl der Aufnahmeplätze 148 entspricht dabei der Anzahl der Aufnahmeplätze 84 der Aufnahmeeinheit 82. Die Aufnahmeplätze 148 sind seitlich begrenzt, im Gegensatz zu der Aufnahmeeinheit 82 fehlt jedoch eine waagrechte Abstützung vergleichbar dem zweiten Element 88. Um zu verhindern, dass die in den Aufnahmeplätzen 148 liegenden Zellen 18 nach unten herausfallen, ist in jedem Aufnahmeplatz 148 ein Klemmelement 150 vorgesehen. Ein solches Klemmelement 150 hat die Aufgabe, die Zelle 18 lösbar zu halten. Das kann beispielsweise durch Reibschluss zwischen dem Klemmelement 150 und der Zelle 18 erfolgen.

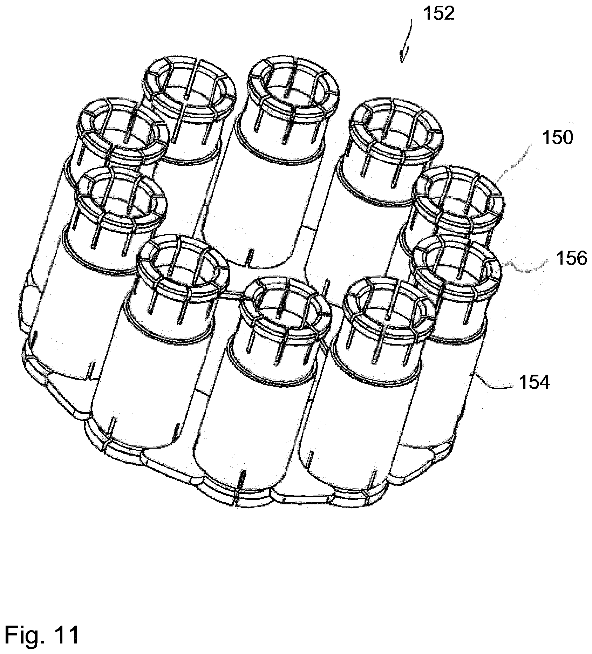

In Figur 11 ist ein Beispiel von Klemmelementen 150 dargestellt. Es handelt sich hierbei um eine Einheit 152, die buchsenförmige Elemente 154 mit daran in Längsrichtung anschließenden Klemmelementen 150 aufweist. Die Anzahl der Elemente 154 und deren Dimensionierung ist an die Aufnahmeplätze 148 angepasst. D. h. mit anderen Worten, dass die Elemente 154 der Einheit 152 in die Aufnahmeplätze 148 der Aufnahmeeinheit 146 einsetzbar, insbesondere einschiebbar sind.

Die Klemmung der Zelle 18 erfolgt über radial bewegliche Zungen 156, die etwas nach innen ragen und beim Einsetzen einer Zelle 18 in radialer Richtung nach außen gedrückt werden. Bei entsprechender Ausgestaltung der Zungen 156 reicht die entstehende Klemmkraft aus, die Zelle 18 im Aufnahmeplatz 148 zu halten.

Wie die Aufnahmeeinheit 82 weist auch die Aufnahmeeinheit 146 an ihrer außen liegenden Fläche Codierungselemente 160 auf, die jeden Aufnahmeplatz 148 eindeutig identifizierbar machen. Die Codierungselemente 160 werden über einen entsprechenden Sensor 162 abgetastet.

Wie eingangs bereits erläutert, wird jeweils eine Zelle 18 aus dem Übergabemagazin 44 ausgeworfen. Hierfür ist eine Auswurfeinheit mit einem Auswurfzylinder 164, einem Kolben 165 und einer Kolbenstange 163 vorgesehen, wobei die Auswurfeinheit am ersten Abschnitt 142 angebracht ist. Die Aufnahmeeinheit 146 ist folglich gegenüber dem Auswurfzylinder 164 drehbar. An der Unterseite des Auswurfzylinders 164, d.h. der Kolbenstange 163, ist ein Kontaktelement 166 vorgesehen, das durch eine Hubbewegung eine darunterliegende Zelle 18 nach unten aus dem Aufnahmeplatz 148 auswerfen kann.

Um zu erfassen, ob eine Zelle 18 unterhalb des Kontaktelements 166 liegt, ist ein weiterer Sensor 168 vorgesehen, der beispielsweise mechanisch erfasst, ob in dem Aufnahmeplatz 148 eine Zelle 18 vorhanden ist.

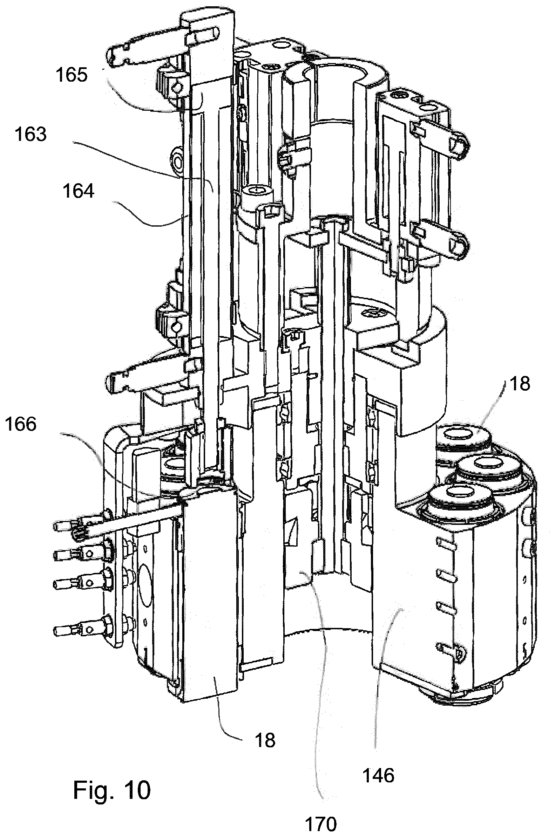

Durch Drehen der Aufnahmeeinheit 146 ist es möglich, jeden Aufnahmeplatz 148 unter das Kontaktelement 166 zu bringen, um die entsprechende Zelle 18 auszuwerfen. Die Drehung der Aufnahmeeinheit 146 um den Winkelbereich, der von zwei benachbarten Aufnahmeplätzen 148 aufgespannt wird, kann auf unterschiedliche Art und Weise über eine Antriebseinheit erfolgen. Im vorliegenden Ausführungsbeispiel ist ebenfalls eine Nockenscheibe 170 vorgesehen (vergleiche Figur 10), in der Nuten ausgebildet sind, in denen Rollen laufen. Im vorliegenden Ausführungsbeispiel wird die Nockenscheibe 170 auf und ab bewegt, während die Rollen fest mit der Aufnahmeeinheit 146 verbunden sind. Durch diese Bewegung und durch die Form der Nuten ergibt sich eine Bewegung der Nockenscheibe und dadurch der Aufnahmeeinheit 146 um einen vorgegebenen Drehwinkel. Die Auf und Ab-Bewegung der Nockenscheibe kann hierbei über einen Hubzylinder erfolgen. Selbstverständlich wäre es auch denkbar, statt der Nockenscheibe 170 die Rollen auf und ab zu bewegen.

Es ist zu beachten, dass die vorliegende Offenbarung auch die folgenden Konfigurationen annehmen kann:
1. Vorrichtung zum Handhaben von Bauteilen, insbesondere zylindrischen Batteriezellen, mit
   einer Magazineinrichtung (80), die ein Trägerelement (54) und zumindest zwei darauf angeordnete Magazine (40, 42) aufweist, wobei jedes Magazin verlagerbar, vorzugsweise drehbar, auf dem Trägerelement (54) gehalten ist und jeweils eine Aufnahmeeinheit (82) mit mehreren Aufnahmeplätzen (84) für jeweils ein Bauteil (16, 18) aufweist,
   einer ersten Antriebseinheit (98), die vorzugsweise mit dem Trägerelement (54) gekoppelt ist, um ein Magazin in eine erste Position (41), Befüllposition, und in eine zweite Position (43), Übergabeposition, zu bewegen; und
   einer Befülleinheit (36), die ausgelegt ist, ein Bauteil in einen Aufnahmeplatz (84) des in der Befüllposition positionierten Magazins (40) zu bringen;
   wobei jedem Aufnahmeplatz (84) ein erstes Element (86) zur seitlichen Abstützung eines Bauteils und ein zweites Element (88) zur senkrechten Abstützung des Bauteils (16, 18) zugeordnet ist; und
   wobei das erste Element (86) und das zweite Element (88) relativ zueinander verlagerbar sind, um das im Aufnahmeplatz (84) gehaltene Bauteil aus einer Aufnahmeposition in eine Übernahmeposition zu bringen, in der das Bauteil von einer nachgeordneten Handhabungseinrichtung (46, 44) aufnehmbar ist.
2. Vorrichtung nach Klausel 1, gekennzeichnet durch eine zweite Antriebseinheit (110), die vorzugsweise im Bereich der Befüllposition (41) vorgesehen und ausgelegt ist, zumindest die Aufnahmeeinheit (82) des Magazins (40) um einen Aufnahmeplatz relativ zu der Befülleinheit (36) weiter zu bewegen, vorzugsweise zu drehen.
3. Vorrichtung nach Klausel 1 oder 2, gekennzeichnet durch eine dritte Antriebseinheit (130), die vorzugsweise im Bereich der Übergabeposition (43) vorgesehen und dem zweiten Element (88) zugeordnet ist, um das zweite Element senkrecht und relativ zu dem ersten Element (86) zu verlagern.
4. Vorrichtung nach Klausel 2 oder 3, dadurch gekennzeichnet, dass die zweite Antriebseinheit (110) und/oder die dritte Antriebseinheit (130) jeweils ein Kupplungselement (116; 132) aufweisen, das jeweils mit einem Kupplungsgegenstück (112; 136) am Trägerelement lösbar kuppelbar ist.
5. Vorrichtung nach Klausel 2 oder 3, dadurch gekennzeichnet, dass die zweite Antriebseinheit (110) und/oder die dritte Antriebseinheit (130) fest am Trägerelement (54) angebracht sind.
6. Vorrichtung nach Klausel 4, dadurch gekennzeichnet, dass das Kupplungsgegenstück der zweiten Antriebseinheit eine Nockenscheibe (112) und das Kupplungselement ein Rollenhalter (116) mit einer oder mehreren Rollen ist, wobei durch senkrechtes Auf- und Ab-Bewegen des Rollenhalters (116) die Nockenscheibe (112) und damit die Aufnahmeeinheit (82) um eine Position gedreht werden kann.
7. Vorrichtung nach Klausel 6, gekennzeichnet durch eine Welle (140), die die Drehbewegung der Nockenscheibe (112) auf die Aufnahmeeinheit überträgt.
8. Vorrichtung nach Klausel 4, 6 oder 7, dadurch gekennzeichnet, dass das Kupplungsgegenstück der dritten Antriebseinheit (130) eine Auflagefläche (134) eines Übertragungselements (136) ist, welches mit dem zweiten Element (88) der Aufnahmeeinheit (82) zusammenwirkt, und das Kupplungselement senkrecht verlagerbar ist, so dass die Hubbewegung des Kupplungselements eine entsprechende Bewegung des Übertragungselements und damit des zweiten Elements (88) bewirkt.
9. Vorrichtung nach Klausel 7, dadurch gekennzeichnet, dass das zweite Element (88) eine Abstützeinheit (90) und darauf vorgesehene Stangen (89) aufweist, wobei das Übertragungselement (136) mit der Abstützeinheit (90) verbunden ist.
10. Vorrichtung nach Klausel 7 und 9, dadurch gekennzeichnet, dass das Übertragungselement (136) durch die Welle (136) gebildet ist.
11. Vorrichtung nach einem der vorhergehenden Klauseln, dadurch gekennzeichnet, dass das Trägerelement (54) als rechteckförmige Platte ausgebildet ist, auf der zwei Magazine (40, 42) an einander gegenüberliegenden Enden der Platte vorgesehen sind.
12. Vorrichtung nach einem der Klauseln 1 bis 10, dadurch gekennzeichnet, dass das Trägerelement (54) als runde Platte ausgebildet ist, wobei mehr als zwei Magazine in einem äußeren Randbereich der Platte vorgesehen sind, vorzugsweise in gleichmäßigen Winkelabständen zueinander.
13. Vorrichtung nach einem der Klauseln 2 bis 12, dadurch gekennzeichnet, dass das erste Element (86) ein ringförmiges Element ist, wobei jeder Aufnahmeplatz (84) zumindest abschnittsweise senkrecht verlaufende Innenflächen zur seitlichen Abstützung eines Bauteils (16, 18) aufweist und nach oben und unten offen ausgestaltet ist.
14. Vorrichtung zum Umsetzen von Bauteilen, wobei die Bauteile insbesondere durch eine Vorrichtung gemäß Klausel 1 bereitgestellt werden, mit
   einer Handhabungseinrichtung (46, 47), und
   einem Übergabemagazin (44), das mit der Handhabungseinrichtung (46, 47) koppelbar und von dieser in zumindest zwei Dimensionen, vorzugsweise drei Dimensionen, verfahrbar ist, und aufweist:
      eine Aufnahmeeinheit (146), die mehrere Aufnahmeplätze (148) für Bauteile, insbesondere Batteriezellen (18) umfasst;
      eine Auswurfeinheit (164, 166), die ausgelegt ist, ein in einem Aufnahmeplatz (148) aufgenommenes Bauteil nach unten auszuwerfen; und
      eine erste Antriebseinheit (170), die ausgelegt ist, die Auswurfeinheit (164) und/oder die Aufnahmeeinheit (146) relativ zueinander zu bewegen, um die Auswurfeinheit (164, 166) jedem Aufnahmeplatz (148) zuordnen zu können.
15. Vorrichtung nach Klausel 14, dadurch gekennzeichnet, dass die Handhabungseinrichtung (46) ein Roboter (47) mit einem Roboterarm (48) ist, wobei das Übergabemagazin (44) am Roboterarm lösbar angebracht ist, und das Übergabemagazin (44) von einer Aufnahmeposition in eine erste Ablageposition und anschließend in weitere Ablagepositionen bewegbar ist.
16. Vorrichtung nach Klausel 14 oder 15, dadurch gekennzeichnet, dass jedem Aufnahmeplatz (148) ein Halte- oder Klemmelement (150) zugeordnet und ausgelegt ist, ein Bauteil im Aufnahmeplatz zu halten.
17. Vorrichtung nach Klausel 14, 15 oder 16, dadurch gekennzeichnet, dass die Auswurfeinheit (164, 166) einen Zylinder mit einem Kolben (165) und einer Kolbenstange (163, 166) aufweist, wobei die Kolbenstange zum Auswurf eines Bauteils mit diesem in Kontakt gebracht werden kann.
18. Verfahren zum Handhaben von Bauteilen, insbesondere zylindrischen Batteriezellen, vorzugsweise mit einer Vorrichtung gemäß Klausel 1, mit
   Einbringen von mehreren Bauteilen (16, 18) nacheinander in einzelne Aufnahmeplätze (84) eines ersten Magazins (40), das in einer ersten Position, Befüllposition, (41) positioniert ist, wobei nach jedem Einbringen einer Zelle das erste Magazin bewegt, insbesondere gedreht, wird;
   Übergabe aller Bauteile eines zweiten Magazins (42), das in einer zweiten Position, Übergabeposition, (43) positioniert ist, an eine Handhabungseinrichtung (46, 47, 44) während des Befüllens des ersten Magazins; und
   Bewegen des gefüllten ersten Magazins in die Übergabeposition (43) und gleichzeitiges Bewegen des zweiten geleerten Magazins in die Befüllposition (41).
19. Verfahren zum Umsetzen von Bauteilen, insbesondere Batteriezellen, wobei die Bauteile insbesondere durch eine Vorrichtung gemäß Klausel 1 bereitgestellt werden, mit
   gleichzeitiges Überführen mehrerer Bauteile in ein Übergabemagazin (44), das von einer Handhabungseinrichtung (46, 47) gehalten und in einer Übernahmeposition positioniert ist,
   Verlagern des Übergabemagazins (44) über ein Endprodukt (12, 14) mit einer Vielzahl von Aufnahmeplätzen für Bauteile (16, 18); und
   Ausbringen jeweils eines einzelnen Bauteils aus dem Übergabemagazins (44) in einen definierten Aufnahmeplatz im Endprodukt (12, 14) und anschließendes Bewegen des Übergabemagazins (44) zum nächsten Aufnahmeplatz bis alle Bauteile im Magazin ausgebracht sind oder das Endprodukt vollständig befüllt ist.

Zusammenfassend ergibt sich aus der vorgenannten Beschreibung, dass die Anlage zum Befüllen eines Endprodukts, beispielsweise eines Batteriemoduls, einfach aufgebaut ist und ein schnelles Befüllen ermöglicht. Insbesondere das Zusammenspiel aus zumindest zwei Magazinen und dem Übergabemagazin am Roboter ermöglicht ein Befüllen des Endprodukts ohne Unterbrechung und sehr flexibel. Insbesondere das Befüllen des Batteriemoduls mit einzelnen Zellen, und nicht mit mehreren Zellen gleichzeitig, macht die Anlage flexible, da jede Anordnung von Zellen im Batteriemodul ohne weiteres erzielbar ist. Zudem kann die Zelle 18 mit gewünschter Pol-Lage Zelle in das Batteriemodul steuerbar eingesetzt werden. Die Anlage ermöglicht mithin jede beliebige Konfiguration von Zellen im Batteriemodul.

## Patentansprüche

1. Vorrichtung zum Handhaben von Bauteilen, insbesondere zylindrischen Batteriezellen, mit
einer Magazineinrichtung (80), die ein Trägerelement (54) und zumindest zwei darauf angeordnete Magazine (40, 42) aufweist, wobei jedes Magazin verlagerbar, vorzugsweise drehbar, auf dem Trägerelement (54) gehalten ist und jeweils eine Aufnahmeeinheit (82) mit mehreren Aufnahmeplätzen (84) für jeweils ein Bauteil (16, 18) aufweist,
einer ersten Antriebseinheit (98), die vorzugsweise mit dem Trägerelement (54) gekoppelt ist, um ein Magazin in eine erste Position (41), Befüllposition, und in eine zweite Position (43), Übergabeposition, zu bewegen; und
einer Befülleinheit (36), die ausgelegt ist, ein Bauteil in einen Aufnahmeplatz (84) des in der Befüllposition positionierten Magazins (40) zu bringen;
wobei jedem Aufnahmeplatz (84) ein erstes Element (86) zur seitlichen Abstützung eines Bauteils und ein zweites Element (88) zur senkrechten Abstützung des Bauteils (16, 18) zugeordnet ist; und
wobei das erste Element (86) und das zweite Element (88) relativ zueinander verlagerbar sind, um das im Aufnahmeplatz (84) gehaltene Bauteil aus einer Aufnahmeposition in eine Übernahmeposition zu bringen, in der das Bauteil von einer nachgeordneten Handhabungseinrichtung (46, 44) aufnehmbar ist.

2. Vorrichtung nach Anspruch 1, **gekennzeichnet durch** eine zweite Antriebseinheit (110), die vorzugsweise im Bereich der Befüllposition (41) vorgesehen und ausgelegt ist, zumindest die Aufnahmeeinheit (82) des Magazins (40) um einen Aufnahmeplatz relativ zu der Befülleinheit (36) weiter zu bewegen, vorzugsweise zu drehen.

3. Vorrichtung nach Anspruch 1 oder 2, **gekennzeichnet durch** eine dritte Antriebseinheit (130), die vorzugsweise im Bereich der Übergabeposition (43) vorgesehen und dem zweiten Element (88) zugeordnet ist, um das zweite Element senkrecht und relativ zu dem ersten Element (86) zu verlagern.

4. Vorrichtung nach Anspruch 2 oder 3, **dadurch gekennzeichnet, dass** die zweite Antriebseinheit (110) und/oder die dritte Antriebseinheit (130) jeweils ein Kupplungselement (116; 132) aufweisen, das jeweils mit einem Kupplungsgegenstück (112; 136) am Trägerelement lösbar kuppelbar ist.

5. Vorrichtung nach Anspruch 2 oder 3, **dadurch gekennzeichnet, dass** die zweite Antriebseinheit (110) und/oder die dritte Antriebseinheit (130) fest am Trägerelement (54) angebracht sind.

6. Vorrichtung nach Anspruch 4, **dadurch gekennzeichnet, dass** das Kupplungsgegenstück der zweiten Antriebseinheit eine Nockenscheibe (112) und das Kupplungselement ein Rollenhalter (116) mit einer oder mehreren Rollen ist, wobei durch senkrechtes Auf- und Ab-Bewegen des Rollenhalters (116) die Nockenscheibe (112) und damit die Aufnahmeeinheit (82) um eine Position gedreht werden kann.

7. Vorrichtung nach Anspruch 6, **gekennzeichnet durch** eine Welle (140), die die Drehbewegung der Nockenscheibe (112) auf die Aufnahmeeinheit überträgt.

8. Vorrichtung nach Anspruch 4, 6 oder 7, **dadurch gekennzeichnet, dass** das Kupplungsgegenstück der dritten Antriebseinheit (130) eine Auflagefläche (134) eines Übertragungselements (136) ist, welches mit dem zweiten Element (88) der Aufnahmeeinheit (82) zusammenwirkt, und das Kupplungselement senkrecht verlagerbar ist, so dass die Hubbewegung des Kupplungselements eine entsprechende Bewegung des Übertragungselements und damit des zweiten Elements (88) bewirkt.

9. Vorrichtung nach Anspruch 7, **dadurch gekennzeichnet, dass** das zweite Element (88) eine Abstützeinheit (90) und darauf vorgesehene Stangen (89) aufweist, wobei das Übertragungselement (136) mit der Abstützeinheit (90) verbunden ist.

10. Vorrichtung nach Anspruch 7 und 9, **dadurch gekennzeichnet, dass** das Übertragungselement (136) durch die Welle (136) gebildet ist.

11. Vorrichtung nach einem der vorhergehenden Ansprüche, **dadurch gekennzeichnet, dass** das Trägerelement (54) als rechteckförmige Platte ausgebildet ist, auf der zwei Magazine (40, 42) an einander gegenüberliegenden Enden der Platte vorgesehen sind.

12. Vorrichtung zum Umsetzen von Bauteilen, wobei die Bauteile insbesondere durch eine Vorrichtung gemäß Anspruch 1 bereitgestellt werden, mit
einer Handhabungseinrichtung (46, 47), und
einem Übergabemagazin (44), das mit der Handhabungseinrichtung (46, 47) koppelbar und von dieser in zumindest zwei Dimensionen, vorzugsweise drei Dimensionen, verfahrbar ist, und aufweist:
eine Aufnahmeeinheit (146), die mehrere Aufnahmeplätze (148) für Bauteile, insbesondere Batteriezellen (18) umfasst;
eine Auswurfeinheit (164, 166), die ausgelegt ist, ein in einem Aufnahmeplatz (148) aufgenommenes Bauteil nach unten auszuwerfen; und
eine erste Antriebseinheit (170), die ausgelegt ist, die Auswurfeinheit (164) und/oder die Aufnahmeeinheit (146) relativ zueinander zu bewegen, um die Auswurfeinheit (164, 166) jedem Aufnahmeplatz (148) zuordnen zu können.

13. Vorrichtung nach Anspruch 12, **dadurch gekennzeichnet, dass** die Handhabungseinrichtung (46) ein Roboter (47) mit einem Roboterarm (48) ist, wobei das Übergabemagazin (44) am Roboterarm lösbar angebracht ist, und das Übergabemagazin (44) von einer Aufnahmeposition in eine erste Ablageposition und anschließend in weitere Ablagepositionen bewegbar ist; und/oder
jedem Aufnahmeplatz (148) ein Halte- oder Klemmelement (150) zugeordnet und ausgelegt ist, ein Bauteil im Aufnahmeplatz zu halten; und/oder
die Auswurfeinheit (164, 166) einen Zylinder mit einem Kolben (165) und einer Kolbenstange (163, 166) aufweist, wobei die Kolbenstange zum Auswurf eines Bauteils mit diesem in Kontakt gebracht werden kann.

14. Verfahren zum Handhaben von Bauteilen, insbesondere zylindrischen Batteriezellen, vorzugsweise mit einer Vorrichtung gemäß Anspruch 1, mit
Einbringen von mehreren Bauteilen (16, 18) nacheinander in einzelne Aufnahmeplätze (84) eines ersten Magazins (40), das in einer ersten Position, Befüllposition, (41) positioniert ist, wobei nach jedem Einbringen einer Zelle das erste Magazin bewegt, insbesondere gedreht, wird;
Übergabe aller Bauteile eines zweiten Magazins (42), das in einer zweiten Position, Übergabeposition, (43) positioniert ist, an eine Handhabungseinrichtung (46, 47, 44) während des Befüllens des ersten Magazins; und
Bewegen des gefüllten ersten Magazins in die Übergabeposition (43) und gleichzeitiges Bewegen des zweiten geleerten Magazins in die Befüllposition (41).

15. Verfahren zum Umsetzen von Bauteilen, insbesondere Batteriezellen, wobei die Bauteile insbesondere durch eine Vorrichtung gemäß Anspruch 1 bereitgestellt werden, mit
gleichzeitiges Überführen mehrerer Bauteile in ein Übergabemagazin (44), das von einer Handhabungseinrichtung (46, 47) gehalten und in einer Übernahmeposition positioniert ist,
Verlagern des Übergabemagazins (44) über ein Endprodukt (12, 14) mit einer Vielzahl von Aufnahmeplätzen für Bauteile (16, 18); und
Ausbringen jeweils eines einzelnen Bauteils aus dem Übergabemagazins (44) in einen definierten Aufnahmeplatz im Endprodukt (12, 14) und anschließendes Bewegen des Übergabemagazins (44) zum nächsten Aufnahmeplatz bis alle Bauteile im Magazin ausgebracht sind oder das Endprodukt vollständig befüllt ist.
